# FASCICULE DE BREVET EUROPEEN

(11) **EP 3 708 877 B1**
(45) Date de publication et mention de la délivrance du brevet: **11.08.2021**
(21) Numéro de dépôt: 20160352.9
(22) Date de dépôt: 02.03.2020
(51) Int. Cl.: F16H 57/08

(54) **TRAIN EPICYCLOÏDAL D'ENGRENAGES, BOÎTE DE TRANSMISSION DE PUISSANCE, AÉRONEF, ET PROCÉDÉ**
PLANETENGETRIEBE, LEISTUNGSÜBERTRAGUNGSGETRIEBE, LUFTFAHRZEUG UND VERFAHREN
EPICYCLIC GEARSET, POWER TRANSMISSION BOX, AIRCRAFT AND METHOD

(30) Priorité: 11.03.2019 FR 1902446
(43) Date de publication de la demande: 16.09.2020
(73) Titulaire: Airbus Helicopters, 13725 Marignane Cedex (FR)
(72) Inventeur: TOURNIAIRE, Jean-Claude, 13290 LES MILLES (FR); MARTINEZ, Jérémy, 13300 SALON DE PROVENCE (FR); TAILLER, Romain, 13122 VENTABREN (FR)
(74) Mandataire: GPI Brevets

(56) Documents cités:
- FR-A1- 3 036 763
- US-A- 3 635 103
- US-A- 6 106 429
- US-A1- 2010 056 321
- US-A1- 2011 009 233

## Description

La présente invention concerne un train épicycloïdal d'engrenages, une boîte de transmission de puissance munie d'un tel train épicycloïdal d'engrenages, un aéronef muni d'un tel train épicycloïdal d'engrenages, et un procédé.

L'invention se situe donc dans le domaine des engrenages, et notamment des boîtes de transmission de puissance d'un giravion.

Un train épicycloïdal d'engrenages comporte classiquement une roue planétaire dentée et une couronne externe dentée. De plus, le train épicycloïdal d'engrenages comporte plusieurs roues dentées formant des roues satellites qui sont portées par un porte-satellites. Les dents des roues satellites sont en prise sur la roue planétaire et sur la couronne externe. Selon la variante, la roue planétaire, le porte-satellites ou la couronne sont solidaires de l'arbre d'entrée ou de l'arbre de sortie. Par exemple, la couronne peut être fixe, la roue planétaire étant solidaire de l'arbre d'entrée et le porte-satellites étant solidaire de l'arbre de sortie.

Dans ce contexte, le porte-satellites comporte un support portant des manetons. Les manetons sont fixés rigidement au support.

Dès lors, chaque roue satellite comporte une jante. La jante s'étend radialement d'une face interne à une face externe portant des dents. La jante est disposée autour d'un maneton. Par exemple, un roulement à rouleaux est interposé entre la face interne de la jante et le maneton. La face interne de la jante peut représenter une bague externe du roulement à rouleaux, le maneton représentant une bague interne du roulement à rouleaux. Lors de son fonctionnement, un train épicycloïdal d'engrenages est susceptible de se détériorer. Une crique peut ainsi apparaitre au sein d'une jante d'une roue satellite. La crique peut provoquer l'ouverture de la jante et un dysfonctionnement du train épicycloïdal d'engrenages.

Deux types de trains épicycloïdaux d'engrenages sont connus.

Un premier type de train épicycloïdal d'engrenages est qualifié « d'ouvert » par commodité. En effet, un tel train épicycloïdal d'engrenages ouvert comporte des manetons montés en porte à faux sur le support, à savoir des manetons s'étendant axialement du support jusqu'à des extrémités distales laissées libres.

Un deuxième type de train épicycloïdal d'engrenages est qualifié de « fermé » par commodité. En effet, un tel train épicycloïdal d'engrenages fermé comporte des manetons ayant des extrémités distales solidarisées à un anneau, les extrémités des manetons étant bloquées conjointement.

Le document FR 1.423.589 décrit un porte-satellites souple muni de manetons pour compenser des imprécisions d'usinage. Un manchon peut être alors agencé entre la jante de chaque roue satellite et le maneton correspondant. Ce manchon est rigidement fixé au maneton correspondant.

Les documents US 2011/009233, US 2010/056321, FR 3036763, US 6106429, US3635103, EP0003894 et JP2000240735 sont aussi connus.

La présente invention a alors pour objet de proposer un train épicycloïdal innovant pour tendre à être tolérant aux dégradations et à proposer une barrière de sécurité supplémentaire à des défaillances d'une roue satellite.

Selon l'invention, un train épicycloïdal d'engrenages comporte une roue planétaire dentée et une couronne externe dentée, le train épicycloïdal d'engrenages étant muni de plusieurs roues satellites dentées qui sont portées par un même porte-satellites. Des dents des roues satellites sont en fonctionnement normal en prise sur la roue planétaire et sur la couronne externe. Le porte-satellites comporte un support et plusieurs manetons portés par ledit support, chaque maneton comprenant un tronçon de fixation qui s'éloigne dudit support jusqu'à une extrémité distale selon un sens, chaque roue satellite étant agencée autour d'un dit tronçon de fixation et présentant un degré de liberté en rotation autour d'un axe d'extension dudit tronçon de fixation.

Le train épicycloïdal d'engrenages comporte un lien de retenue qui est porté par lesdits manetons et relie les manetons, chaque roue satellite étant agencée dans une zone comprise entre le support et le lien de retenue, chaque maneton présentant une liberté de mouvement restreinte par rapport au lien de retenue.

Par exemple, les manetons sont agencés de manière à ce que leurs extrémités distales respectives soient inscrites à l'arrêt sur un cercle géométrique. L'expression « cercle géométrique » ne désigne pas un anneau mais une forme géométrique reliant circonférentiellement les extrémités distales des manetons, chaque extrémité distale étant de fait circonférentiellement à côté de deux extrémités distales adjacentes. Les extrémités distales peuvent être circonférentiellement équiréparties, un même arc de cercle séparant deux extrémités distales adjacentes.

L'expression « chaque maneton présentant une liberté de mouvement restreinte par rapport au lien de retenue » signifie qu'un maneton peut se déplacer relativement au lien de retenue, au-delà d'un simple jeu de montage, le déplacement étant toutefois restreint à un déplacement prédéterminé. En particulier, un maneton peut se déplacer relativement au lien de retenue au repos sur sollicitation humaine par exemple ou en utilisation à savoir lorsque le porte-satellites est mobile en rotation autour de son axe de rotation. Au repos, le lien de retenue peut n'exercer aucun effort sur les manetons, éventuellement radialement et / ou en dehors d'un effort axial provoqué par les forces de gravité, à savoir sensiblement aucun effort voire strictement aucun effort. De même, le lien de retenue peut n'exercer aucun effort, à savoir sensiblement aucun effort voire strictement aucun effort, sur les manetons dans des conditions normales d'utilisation ou tous les manetons se déplacement de manière homogène. Par contre, si la déformée du porte-satellites en utilisation introduit un déplacement des manetons dans des sens contraires, le lien de retenue exerce un effort sur les manetons pour contrer cet effet. Par exemple, chaque maneton comporte au moins deux degrés de liberté, et en particulier deux degrés de liberté en translation dans un plan orthogonal au maneton, ces degrés de libertés étant néanmoins restreints à des plages de déplacement prédéterminées.

Un tel train épicycloïdal d'engrenages selon l'invention peut tendre à avoir une durée de vie optimisée.

La demanderesse a identifié un mode de dysfonctionnement d'un train épicycloïdal d'engrenages. En fonctionnement, les manetons tendent à s'incliner, en présence d'un couple, et présentent chacun un angle par rapport à l'axe central de rotation du porte-satellites. Cet angle est faible mais non nul. Les manetons demeurent toutefois perpendiculaires au support, ce qui implique que le support se déforme lorsque les manetons s'inclinent.

En fonctionnement normal, les angles de tous les manetons sont sensiblement équivalents ce qui tend à maintenir constante la distance séparant les deux extrémités distales de deux manetons adjacents. Il n'y a pas alors de risques d'interférence entre deux roues satellites disposées sur deux manetons adjacents.

Par contre, lorsque la jante d'une roue de satellite se rompt suite à une usure, un écaillage ou une rupture en fatigue par exemple, cette roue satellite est alors moins sollicitée mécaniquement. Le maneton portant cette roue satellite détériorée s'incline différemment des autres ce qui induit une déformation erratique du porte-satellites au niveau de ce maneton.

La roue satellite fendue peut éventuellement endommager la roue satellite adjacente et induire un dysfonctionnement du train épicycloïdal d'engrenages.

En outre, l'ouverture de la roue satellite endommagée peut empêcher une dent de cette roue satellite de se positionner entre deux dents de la roue planétaire. Cette ouverture, peut empêcher un bon engrènement entre la roue satellite et la couronne et/ou entre la roue satellite et la roue planétaire, ou provoquer une interférence entre ladite roue satellite et les roue satellites adjacentes. Cette dent de cette roue satellite risque ainsi de s'appuyer sur le sommet d'une dent de la roue planétaire ce qui tend à déplacer radialement la roue satellite endommagée vers la couronne dentée. La roue satellite endommagée exerce alors un effort radial important sur la couronne dentée susceptible de détériorer la couronne dentée.

Le système de maintien de l'invention tend alors à permettre la résolution de ce problème de manière innovante à l'aide d'un train épicycloïdal d'engrenages qui n'est ni ouvert ni fermé mais mixte.

Sur un train épicycloïdal d'engrenages ouvert usuel, les manetons présentent une souplesse tangentielle importante ne permettant pas de limiter un déplacement d'une roue satellite ouverte.

Un train épicycloïdal d'engrenages fermé usuel comporte une pièce rigide bloquant strictement l'extrémité des manetons même en l'absence de défauts. Un train épicycloïdal fermé implique une plus grande dispersion dans la répartition des efforts sur les manetons. Le train épicycloïdal fermé est alors soumis à des efforts de fatigue plus importants durant un fonctionnement nominal et peut donc avoir une durée de vie réduite.

Le lien de retenue de l'invention permet de maintenir chaque distance séparant deux manetons adjacents non pas strictement constante mais variable dans une plage prédéfinie, par exemple de l'ordre du dixième de millimètre. Les extrémités distales des manetons ont une liberté de mouvement par rapport au lien de retenue contrairement à un train épicycloïdal d'engrenages fermé, mais cette liberté de mouvement est restreinte contrairement à un train épicycloïdal d'engrenages ouvert. En particulier, un jeu radial entre chaque maneton et le lien de retenue permet au lien de retenue de n'avoir aucune incidence sur le comportement du porte-satellites dans des conditions normales d'utilisation, à savoir en dehors de la rupture d'une roue-satellite. Le lien de retenue est alors passif en raison de sa relative souplesse intrinsèque et de la présence de jeux entre les manetons et le lien de retenue et n'est pas soumis à des efforts importants. Lesdits jeux entre les manetons et le lien de retenue sont différents voire supérieurs à des tolérances de fabrication. Par contre, si une roue satellite s'ouvre ou se rompt accidentellement, le lien de retenue tend à maintenir en position le maneton et de fait la roue satellite déficiente.

Le train épicycloïdal d'engrenages peut de plus comporter une ou plusieurs des caractéristiques qui suivent.

Ainsi, le lien de retenue peut comprendre une plaque, par exemple au moins entre deux points d'accroches à deux manetons adjacents. Une plaque du lien de retenue peut être sensiblement de forme plane.

Un tel lien de retenue peut être suffisamment souple et léger pour ne pas perturber le fonctionnement du porte-satellites en conditions normales. D'autres moyens présentant une forte rigidité lors d'une variation de distance tels qu'une bielle ou un câble sont envisageables.

Selon un aspect, le lien de retenue peut être de forme annulaire, notamment localement et/ou en présence d'une plaque reliant deux points d'accroche.

Selon l'invention, le lien de retenue peut comporter un pion de centrage par maneton, chaque maneton et un dit pion de centrage associé étant emboités axialement au moins partiellement l'un dans l'autre selon l'axe d'extension dudit maneton, ledit pion de centrage pénétrant dans une cavité du maneton associé ou ledit maneton pénétrant dans une cavité dudit pion de centrage associé, un jeu radial séparant au repos un maneton et le pion de centrage associé perpendiculairement au dit axe d'extension du maneton.

Un tel axe d'extension peut être un axe de symétrie du maneton. L'axe d'extension peut être confondu avec un axe de symétrie du pion de centrage associé au repos.

Les pions de centrage représentent des points d'accroches. Chaque pion de centrage est relié à au moins un pion de centrage adjacent par un organe rigide du lien de retenue tel qu'une plaque ou des bielles par exemple.

Cet emboitement d'un maneton et d'un pion de centrage autorise le déplacement relatif du maneton et du lien de retenue en raison du jeu radial par exemple de l'ordre du dixième de millimètre. En mode nominal à savoir lorsque le système est en mouvement et qu'aucune roue satellite n'est défaillante, la plaque n'est pas sollicitée. De plus, un tel emboitement peut optimiser la transmission d'efforts entre le maneton et le lien de retenue par frottement et appui plan, ces efforts ne devant pas nécessairement transiter par des organes de fixation.

Eventuellement, chaque maneton comporte par rapport au pion de centrage associé au moins deux degrés de liberté en translation dans un plan orthogonal à l'axe d'extension du maneton.

Selon un aspect, chaque pion de centrage peut comporter une paroi de liaison, chaque maneton comportant un fond, chaque paroi de liaison étant vissée à un fond par un organe fileté.

Les expressions « paroi de liaison » et « fond » sont utilisées par commodité pour distinguer deux parois et/ou voiles respectivement du lien de retenue et d'un maneton et sont à considérer au regard d'une direction allant du lien de retenue vers le maneton.

Du fait de l'emboitement précédemment décrit, les efforts ne transitent pas nécessairement par l'organe fileté. Un tel organe fileté peut prendre la forme d'une vis, d'un goujon ...

L'utilisation d'un système vis/écrou pour lier le lien de retenue à un maneton permet de rendre démontable le lien de retenue pour avoir accès aux roues satellites si besoin.

Au repos, à savoir lorsque le train épicycloïdal d'engrenages n'est pas mis en mouvement, ladite paroi de liaison peut être en appui selon ledit axe d'extension contre ledit fond.

Selon une possibilité, un premier jeu sépare radialement ledit organe fileté et ledit fond perpendiculairement au dit axe d'extension du maneton et/ou à l'organe fileté, un deuxième jeu séparant radialement ledit organe fileté et ladite paroi de liaison perpendiculairement au dit axe d'extension du maneton et/ou à l'organe fileté, au moins le premier jeu ou le deuxième jeu pouvant être supérieur au jeu radial.

Le jeu radial est alors inférieur au premier jeu et/ou au deuxième jeu pour garantir une transmission des efforts directement entre le pion de centrage et le maneton associé. Cette caractéristique permet l'obtention d'un organe fileté ayant un diamètre minimisé.

Par exemple, au moins le premier jeu ou le deuxième jeu est supérieur ou égal au double du jeu radial.

Par suite, le premier jeu est supérieur ou égal au double du jeu radial et/ou le deuxième jeu est supérieur ou égal au double du jeu radial.

Le jeu radial peut être défini par essais, calculs ou simulations par exemple afin d'être suffisamment grand pour assurer un montage isostatique, contrairement à un train épicycloïdal d'engrenages fermé, et suffisamment petit pour assurer la reprise d'efforts directement entre le maneton et le lien de retenue lorsqu'une roue satellite est défaillante.

Le jeu radial peut être compris entre une borne inférieure et une borne supérieure. La borne inférieure peut être supérieure à la tolérance de fabrication réalisable et dimensionnée pour la prise en compte des déformations. La borne supérieure du jeu radial peut être dimensionnée en fonction d'une ouverture maximale autorisée, cette ouverture maximale évitant toute interférence entre roues satellites adjacentes et permettant de rester dans un mode d'engrènement non divergent.

Selon un aspect, chaque maneton peut présenter un espace interne en communication hydraulique avec un milieu extérieur, ledit maneton présentant un orifice de lubrification en communication fluidique avec une roue satellite portée par ce maneton, ledit fond présentant un premier canal en vis-à-vis d'un deuxième canal de la paroi de liaison, ledit deuxième canal débouchant sur ledit milieu extérieur.

L'espace interne peut être alimenté en liquide lubrification en fonctionnement par un système de lubrification usuel. Le liquide lubrification rentre dans l'espace interne et lubrifie les organes de roulement associés via chaque orifice de lubrification. Au repos, le liquide de lubrification peut être évacué par gravité successivement par les premier et deuxième canaux.

Selon un autre aspect, ledit lien de retenue peut comporter un système d'arrêt en rotation d'une bague interne d'un organe de roulement par maneton, ledit système d'arrêt faisant saillie dudit lien de retenue vers ladite zone pour immobiliser en rotation par rapport au maneton ladite bague interne d'un organe de roulement, ledit organe de roulement étant interposé entre un maneton et une roue satellite. Par exemple, le système d'arrêt en rotation peut comprendre un pion de blocage en rotation.

Selon un aspect, le lien de retenue peut présenter entre deux pions de centrage une épaisseur plus faible que l'épaisseur du support.

Par exemple, le lien de retenue peut présenter entre deux pions de centrage une épaisseur adaptée à sa fonction, à savoir pour présenter une rigidité faible en flexion et forte en traction, une rigidité faible étant par nature inférieure à une rigidité forte. Par exemple l'épaisseur du lien de retenue entre deux manetons est au moins cinq fois plus faible que l'épaisseur du support du porte satellite.

Une telle épaisseur permet au lien de retenue de ne pas entraver le fonctionnement du porte-satellites dans des conditions normales et/ou d'empêcher toute interférence et/ou de rester dans un mode d'engrènement non divergent

L'épaisseur représente la plus petite dimension du corps concerné. Pour le lien de retenue, une telle épaisseur est par exemple à considérer entre une face interne du lien de retenue en regard des roues satellites et une face externe du lien de retenue opposée à la face interne.

L'invention vise aussi une boîte de transmission de puissance destinée à un aéronef, cette boîte de transmission de puissance comportant un train épicycloïdal d'engrenages selon cette invention.

De même, l'invention vise un aéronef (voir revendication 12) comportant un train épicycloïdal d'engrenages selon cette invention, éventuellement au sein d'une boîte de transmission de puissance.

L'invention vise aussi un procédé (voir revendication 13) pour optimiser un train épicycloïdal d'engrenages selon la revendication 1.

Chaque extrémité distale étant séparée d'une autre extrémité distale adjacente par une distance, ledit procédé comporte une étape de liaison des manetons avec un lien de retenue, chaque maneton ayant un degré de liberté restreint par rapport au lien de retenue. Le lien de retenue n'exerce aucun effort sur les manetons dans des conditions normales et maintient ladite distance dans une plage prédéfinie en présence d'une crique sur une roue satellite. L'expression « le lien de retenue n'exerce aucun effort sur les manetons dans des conditions normales » signifie que le lien de retenue n'exerce sensiblement aucun effort sur les manetons dans des conditions normales, à savoir au repos ou encore lorsque les manetons s'inclinent de manière homogène, et signifie donc :
- soit que le lien de retenue n'exerce strictement aucun effort sur les manetons dans des conditions normales,
- soit que le lien de retenue exerce un effort négligeable sur les manetons dans des conditions normales, à savoir un effort ne tendant pas à déplacer les manetons voire notamment un effort qui est inférieur à un effort exercé sur au moins un maneton en présence d'une crique sur une roue satellite pour maintenir ladite distance dans une plage prédéfinie.

Ledit lien de retenue peut comporter un pion de centrage par maneton, chaque maneton et un dit pion de centrage associé étant emboités axialement au moins partiellement l'un dans l'autre selon l'axe d'extension dudit maneton, ledit pion de centrage pénétrant dans une cavité du maneton associé ou ledit maneton pénétrant dans une cavité dudit pion de centrage associé, un jeu radial séparant au repos un maneton et le pion de centrage associé perpendiculairement au dit axe d'extension du maneton.

Selon un aspect, chaque maneton a par exemple un degré de liberté restreint par rapport au lien de retenue selon une direction tangentielle, à savoir sensiblement autour d'un axe de rotation du porte-satellites sur lui-même.

L'invention et ses avantages apparaîtront avec plus de détails dans le cadre de la description qui suit avec des exemples donnés à titre illustratif en référence aux figures annexées qui représentent :
[Fig 1] la figure 1, un schéma illustrant un porte-satellites de l'art antérieur en utilisation et en l'absence d'un défaut,
[Fig 2] la figure 2, un schéma illustrant la déformation d'un porte-satellites de l'art antérieur en utilisation et en présence d'une roue satellite défectueuse,
[Fig 3] la figure 3, un schéma illustrant un porte-satellites de l'invention en utilisation et en l'absence d'un défaut,
[Fig 4] la figure 4, un schéma illustrant un porte-satellites de l'invention en utilisation et en présence d'une roue satellite défectueuse,
[Fig 5] la figure 5, un schéma illustrant un aéronef et une boîte de transmission de puissance munis d'un train épicycloïdal d'engrenages selon l'invention,
[Fig 6] la figure 6, un schéma illustrant un train d'engrenages épicycloïdal ayant des pions de centrage pénétrant dans des manetons,
[Fig 7] la figure 7, un schéma illustrant un train d'engrenages épicycloïdal ayant des manetons pénétrant dans des pions de centrage.

Les éléments présents dans plusieurs figures distinctes sont affectés d'une seule et même référence.

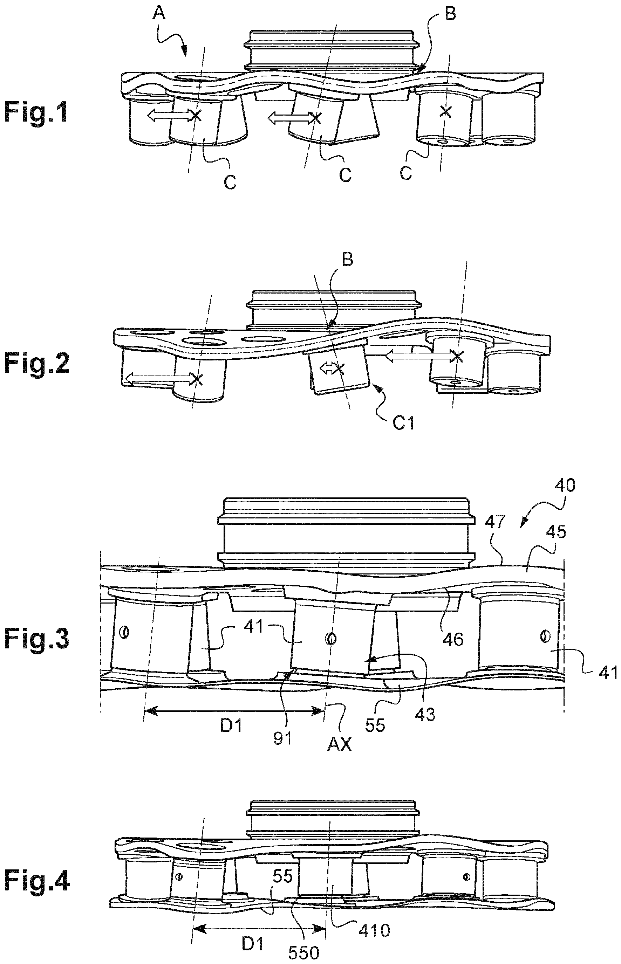

Les figures 1 à 2 présentent la problématique.

Selon la figure 1, un train épicycloïdal d'engrenages présente un porte-satellites A selon l'art antérieur. Ce porte-satellites A est muni d'un support B portant des manetons C, les manetons C portant des roues-satellites non représentées.

Sous les efforts subis lorsque le train épicycloïdal d'engrenages est en mouvement, tous les manetons C peuvent s'incliner sensiblement de manière identique ce qui tend à déformer le support B. Ce support B se déforme en prenant un aspect de « vagues ».

En référence à la figure 2, si une roue satellite s'ouvre, le maneton C1 portant cette roue satellite endommagée est moins sollicitée. Ce maneton C1 s'incline dès lors différemment des autres manetons. Le comportement de tout le train épicycloïdal d'engrenages en est perturbé.

En référence à la figure 3 et selon l'invention, un train épicycloïdal d'engrenages présente un porte-satellites 40. Ce porte-satellites 40 est muni d'un support 45. Le support 45 porte des manetons 41, chaque maneton 41 s'étendant du support 45 jusqu'à une extrémité distale 43. Les manetons peuvent s'étendre d'un unique et même côté du support.

Le train épicycloïdal d'engrenages comporte un lien de retenue 55 reliant les extrémités distales 43 des manetons 41 entre elles, un jeu radial 91 séparant au repos chaque maneton 41 et le lien de retenue 55 selon une direction orthogonale à un axe d'extension AX du maneton.

Dans des conditions normales, le jeu radial 91 permet de rendre le lien de retenue 55 sensiblement transparent pour le porte-satellites 40.

Par contre et en référence à la figure 4, si une roue satellite s'ouvre le maneton 410 la portant tend à s'incliner différemment des autres manetons. Le lien de retenue 55 limite cette inclinaison par interférence de forme pour éviter le phénomène illustré sur la figure 2. Le maneton 410 bute en effet contre une paroi 550 du lien de retenue 55 ce qui limite son mouvement. Le lien de retenue 55 permet ainsi de maintenir la distance D1 séparant deux manetons sensiblement constante aux jeux radiaux près.

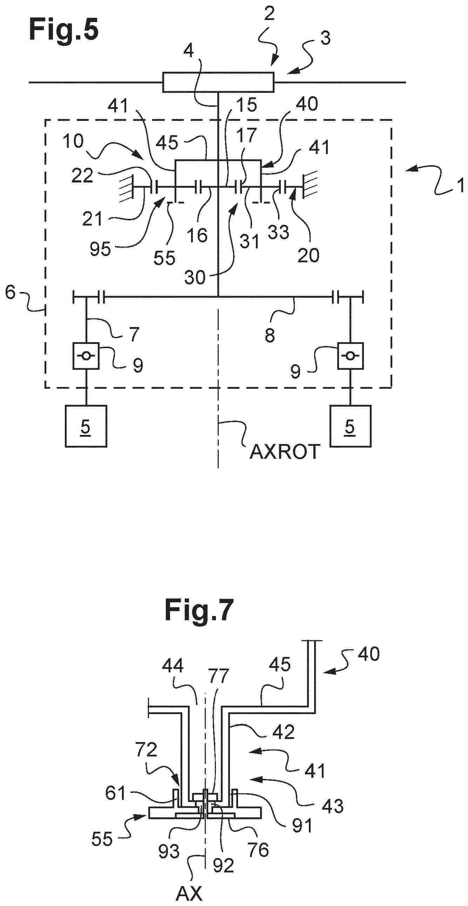

La figure 5 illustre un train épicycloïdal d'engrenages 10 selon l'invention. Ce train épicycloïdal d'engrenages 10 comporte une roue planétaire 15 dentée. La roue planétaire 15 comporte ainsi une jante 16 portant des dents 17. Par exemple, les dents 17 sont positionnées sur une tranche de la jante 16 de la roue planétaire 15.

De plus, le train épicycloïdal d'engrenages 10 comporte une couronne externe 20 dentée. Par exemple, la couronne externe 20 comporte un anneau 21 portant des dents 22. Les dents 22 de la couronne externe 20 sont en regard des dents 17 de la roue planétaire 15.

La roue planétaire 15 et/ou la couronne externe 20 possède(nt) un degré de liberté en rotation autour d'un axe de rotation AXROT. La roue planétaire 15 dentée et ladite couronne externe 20 dentée sont coaxiales.

En outre, le train épicycloïdal d'engrenages 10 est muni d'un porte-satellites 40. Ce porte-satellites 40 est pourvu d'un support 45 portant une pluralité de manetons 41. Chaque maneton 41 porte au moins une roue satellite 30. Par exemple, chaque maneton 41 porte une unique roue satellite 30. Chaque roue satellite 30 comporte des dents 33 coopérant avec les dents de la couronne externe 20 et de la roue planétaire 15.

De plus, un lien de retenue 55 est porté conjointement par chacun des manetons 41. Chaque roue satellite 30 est agencée dans une zone 95 comprise en élévation entre le support 45 du porte-satellites 40 et le lien de retenue 55. Chaque maneton 41 présente une liberté de mouvement restreinte par rapport au lien de retenue 55. Chaque maneton a par exemple un degré de liberté restreint par rapport au lien de retenue selon une direction tangentielle, à savoir sensiblement autour de l'axe de rotation AXROT du porte-satellites sur lui-même et donc tangentiellement à un cercle centré sur cet axe de rotation AXROT.

En référence à la figure 5, un train épicycloïdal d'engrenages 10 peut être agencé dans une boîte de transmission de puissance et/ou sur un aéronef et notamment sur un aéronef qui est muni d'une voilure tournante 2. Par exemple, l'aéronef 1 comporte au moins un moteur 5 qui entraîne en rotation les organes d'une boîte de transmission de puissance 6, la boîte de transmission de puissance 6 mettant en rotation un rotor principal 3 de la voilure tournante 2. Par exemple, la boîte de transmission de puissance 6 comporte un arbre d'entrée 7 par moteur 5, chaque arbre d'entrée 7 étant relié à un moteur 5 par une roue libre 9 classique. Cet arbre d'entrée 7 met en mouvement la voilure tournante 2 via divers engrenages de la boîte de transmission de puissance 6. Par exemple, chaque arbre d'entrée 7 entraîne en rotation un pignon qui engrène une roue de conjugaison 8. Cette roue de conjugaison 8 entraîne alors selon cet exemple en rotation la roue planétaire 15 d'un train d'engrenage épicycloïdal 10 selon l'invention, le porte-satellites 40 de ce train d'engrenage épicycloïdal 10 étant relié à la voilure tournante 2 par un mât rotor 4.

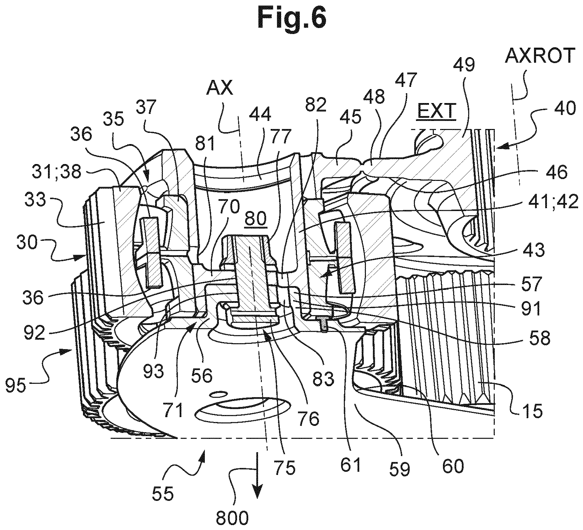

La figure 6 détaille un porte-satellites 40 et un lien de retenue 55 selon une première réalisation de l'invention.

Quelle que soit la réalisation, le train épicycloïdal d'engrenages 10 possède de multiples roues satellites 30 dentées qui sont agencées chacune dans la zone 95 annulaire présente radialement entre les dents de la couronne externe et les dents 17 de la roue planétaire 15 ainsi qu'axialement entre le support 45 et le lien de retenue 55. La couronne externe n'est pas représentée sur la figure 6 pour ne pas alourdir inutilement cette figure. Les roues satellites 30 sont toutes portées par un même porte-satellites 40.

Un tel porte-satellites 40 présente un support 45. Le support 45 s'étend selon un sens 800 d'une deuxième face 47 vers une première face 46, la première face 46 étant en regard des roues satellites 30. Par exemple, ce sens 800 est parallèle à l'axe de rotation AXROT du porte-satellites 40. Le support 45 peut être solidarisé à un tube de liaison 49.

Selon un autre aspect, le support 45 peut présenter une plaque principale 48, par exemple de forme annulaire. La plaque principale 48 s'étend selon son épaisseur de la première face 46 à la deuxième face 47. Selon un autre exemple, le support 45 comporte des bras portant des manetons 41.

De plus, le porte-satellites 40 est pourvu de plusieurs manetons 41 portés par le support 45. Chaque maneton 41 possède un tronçon de fixation 42. Ce tronçon de fixation 42 s'éloigne du support 45, et le cas échéant à partir de ladite première face 46 de la plaque principale 48, en s'étendant selon le sens 800 d'une extrémité proximale 44 jusqu'à une extrémité distale 43.

Le terme « extrémité » peut désigner une zone extrémale. L'extrémité distale et l'extrémité proximale désignent alors chacune un tronçon du maneton selon l'axe d'extension AX de ce maneton. Par exemple, un maneton peut être partagé en un tronçon proximal 44 et un tronçon distale 43 dans le prolongement l'un de l'autre selon l'axe d'extension.

L'extrémité proximale 44 peut avoir une forme sensiblement cylindrique et peut être creuse de manière à délimiter un espace interne 80. De plus, l'espace interne 80 peut être en communication fluidique avec un milieu extérieur EXT situé à l'extérieur du train épicycloïdal d'engrenages 10, éventuellement par une ouverture du support 45.

De même, l'extrémité distale 43 peut avoir une forme sensiblement cylindrique et peut être creuse.

Par ailleurs, chaque maneton 41 peut comporter un fond 70. Selon la figure 6, ce fond 70 peut être interposé entre l'extrémité proximale 44 et l'extrémité distale 43, cette extrémité distale 43 délimitant alors radialement une cavité 71 débouchant sur l'extérieur. En coupe dans un plan contenant un axe d'extension AX du maneton 41, le maneton 41 peut alors avoir une forme en H.

Selon un autre exemple, le fond 70 peut être situé au bout de l'extrémité distale 43 par exemple. En coupe dans un plan contenant un axe d'extension AX du maneton, le maneton 41 peut alors avoir une forme en U.

Indépendamment de cet aspect, chaque maneton 41 peut être une partie intégrante du support 45, le support 45 et les manetons 41 formant une pièce monolithique. Selon un autre exemple, un maneton 41 peut être fixé au support 45 de manière usuelle.

Quelle que soit la réalisation des manetons 41, chaque roue satellite 30 est agencée autour d'un tronçon de fixation 42 d'un maneton 41 de façon à présenter au moins un degré de liberté en rotation autour d'un axe d'extension AX du maneton et du tronçon de fixation 42. Un même maneton 41 peut porter une ou plusieurs roues satellites 30. De plus, chaque roue satellite 30 est en prise sur la roue planétaire 15 et sur la couronne externe 20 non représentée sur la figure 6.

Dès lors, chaque roue satellite 30 comporte une jante 31 portant à sa périphérie externe des dents 33 engrenant les dents 17 de la roue planétaire 15 et les dents 22 de la couronne externe 20. De plus, un système de roulement 35 est interposé entre une périphérie interne de la jante 31 et un maneton 41. Un tel système de roulement 35 peut comprendre des organes de roulement 36 de type billes ou encore rouleaux par exemple, et en particulier des rouleaux en forme de tonneaux. Les roulements en tonneaux tendent à garder les dents des roues satellites sensiblement parallèles aux dents de la couronne externe dentée 20 et de la roue planétaire 15. Une roue satellite peut coopérer avec deux organes de roulement par exemple.

Les organes de roulement 36 sont disposés entre une bague externe 38 solidaire en rotation des dents 32 de la roue satellite 30 et une bague interne 37 solidaire d'un maneton 41. La bague externe 38 est une partie de la jante 31 ou est fixée à cette jante 31. De même, la bague interne 37 est une partie d'un maneton 41 ou est fixée à ce maneton 41.

Par ailleurs, le train épicycloïdal d'engrenages 10 comporte un système de maintien 50 pour maintenir une distance entre deux manetons 41 adjacents sensiblement dans une plage prédéfinie non nulle.

Le système de maintien 50 comporte un lien de retenue 55 reliant les manetons 41 entre eux tout en laissant une liberté de mouvement limitée à chaque maneton 41 par rapport à ce lien de retenue 55.

Le lien de retenue 55 est ainsi porté par chacun des manetons 41. Le lien de retenue 55 présente par exemple une forme sensiblement annulaire.

Le lien de retenue 55 comporte un pion de centrage 56 par maneton 41. Ainsi, chaque maneton 41 coopère avec un unique pion de centrage 56. De la même manière chaque pion de centrage 56 coopère avec un unique maneton 41. Un maneton 41 et le pion de centrage 56 coopérant avec ce maneton 41 sont qualifiés de « associés ».

Par ailleurs, les pions de centrage 56 sont reliés entre eux par des organes de liaison rigides, et par exemple par une plaque annulaire 59 selon la variante illustrée ou par des bielles... Ainsi, chaque pion de centrage 56 peut s'étendre d'un organe de liaison rigide, à savoir de la plaque 59 selon la figure 6, vers un maneton 41. Entre deux pions de centrage 56 adjacents, le lien de retenue 55 et le cas échéant la plaque 59 présente une épaisseur 60 adaptée à sa fonction, à savoir une épaisseur permettant d'atteindre une rigidité faible en flexion et forte en traction. Par exemple l'épaisseur du lien de retenue entre manetons est cinq fois plus faible que celle du support du porte satellite.

Selon un autre aspect, un maneton 41 et le pion de centrage 56 associé sont emboités axialement au moins partiellement l'un dans l'autre selon un axe d'extension AX du maneton 41. Un maneton 41 et le pion de centrage 56 associé sont éventuellement de forme complémentaire.

Selon la première réalisation de la figure 6, un pion de centrage 56 pénètre dans une cavité 71 du maneton 41 associé.

Selon la deuxième réalisation de la figure 7 le maneton 41 pénètre dans une cavité 72 du pion de centrage 56 associé.

Quelle que soit la réalisation et par exemple en référence à la figure 6, un jeu radial 91 sépare cependant au repos un maneton 41 et le pion de centrage 56 associé selon toutes les directions orthogonales à l'axe d'extension AX du maneton 41.

Par ailleurs et quelle que soit la réalisation, chaque pion de centrage 56 comporte une paroi de liaison 57. La paroi de liaison est au repos sensiblement parallèle au fond du maneton associé.

Selon la première réalisation de la figure 6, un pion de centrage 56 comporte une paroi latérale 58 qui s'étend d'une zone inférieure jusqu'à un sommet, ce sommet étant partiellement obturé par la paroi de la liaison 57. En coupe dans un plan contenant un axe d'extension AX du maneton 41, le pion de centrage 56 peut avoir au repos sensiblement une forme en U inversé. La paroi de liaison 57 est dans ce cas insérée dans la cavité 71 du maneton 41 associé.

Selon la deuxième réalisation de la figure 7, un pion de centrage 56 comporte une paroi latérale 58 qui s'étend d'une zone inférieure jusqu'à un sommet ouvert, la paroi de la liaison 57 étant localisée axialement entre la zone inférieure et le sommet. En coupe dans un plan contenant un axe d'extension AX du maneton 41, le pion de centrage 56 peut avoir au repos sensiblement une forme en H. Le pion de centrage 56 comporte alors une cavité 72, cette cavité 72 étant délimitée radialement par la paroi latérale et étant localisée axialement entre la paroi de liaison 57 et le sommet. L'extrémité distale 43 du maneton 41 associé est alors insérée dans cette cavité 72.

Quelle que soit la réalisation et par exemple en référence à la figure 6, chaque paroi de liaison 57 peut être vissée à un fond 70 par un système vis/écrou 75 muni d'un organe fileté 76. Par exemple, une vis 76 traverse la paroi de liaison 57 et le fond 70 pour être vissé à un écrou 77, une rondelle étant agencée entre la tête de la vis 76 et la paroi de liaison 57 et une autre rondelle étant agencée entre l'écrou 77 et le fond 70.

Eventuellement, au repos la paroi de liaison 57 est en appui contre le fond 70.

Par ailleurs, un premier jeu 92 peut séparer radialement l'organe fileté 76 et le fond 70 au repos selon toutes les directions orthogonales à l'axe d'extension AX du maneton 41. De même, un deuxième jeu 93 sépare radialement l'organe fileté 76 et la paroi de liaison 57 selon toutes les directions orthogonales à l'axe d'extension AX du maneton 41. Dès lors, le premier jeu 92 et/ou le deuxième jeu 93 est supérieur au jeu radial 91, voire est supérieur ou égal au double du jeu radial 91.

Quelle que soit la réalisation et par exemple en référence à la figure 6, chaque maneton 41 peut comprendre un orifice de lubrification 81 mettant en communication fluidique une roue satellite 30 portée par ce maneton et l'espace interne 80 de ce maneton 41. De plus, le fond 70 peut présenter un premier canal 82 en vis-à-vis d'un deuxième canal 83 du pion de centrage associé qui débouche sur le milieu extérieur EXT, le premier canal 82 étant en communication fluidique avec le deuxième canal 83.

Quelle que soit la réalisation et par exemple en référence à la figure 6, le lien de retenue 55 peut par ailleurs comporter un système d'arrêt par maneton 41. Un tel système d'arrêt fait saillie du lien de retenue, par exemple le système d'arrêt comporte un pion d'arrêt 61 en saillie d'une plaque portant les pions de centrage, vers la zone 95. Le pion d'arrêt 61 immobilise en rotation par rapport au maneton 41 une bague interne 37 d'un organe de roulement par interférence de forme.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Train épicycloïdal d'engrenages (10) comportant une roue planétaire (15) dentée et une couronne externe dentée (20), ledit train épicycloïdal d'engrenages (10) étant muni de plusieurs roues satellites (30) dentées qui sont portées par un même porte-satellites (40), le porte-satellites (40) comportant un support (45) et plusieurs manetons (41) portés par ledit support (45), chaque maneton (41) comprenant un tronçon de fixation (42) qui s'éloigne dudit support (45) jusqu'à une extrémité distale (43) selon un sens (800), chaque roue satellite (30) étant agencée autour d'un dit tronçon de fixation (42) et présentant un degré de liberté en rotation autour d'un axe d'extension (AX) dudit tronçon de fixation (42),
**caractérisé en ce que** ledit train épicycloïdal d'engrenages (10) comporte un lien de retenue (55) qui est porté par lesdits manetons (41) et relie les manetons (41), chaque roue satellite (30) étant agencée dans une zone (95) comprise entre le support (45) et le lien de retenue (55), chaque maneton (41) présentant une liberté de mouvement restreinte par rapport au lien de retenue (55), ledit lien de retenue (55) comportant un pion de centrage (56) par maneton (41), chaque maneton (41) et un dit pion de centrage (56) associé étant emboités axialement au moins partiellement l'un dans l'autre selon l'axe d'extension (AX) dudit maneton (41), ledit pion de centrage (56) pénétrant dans une cavité (71) du maneton (41) associé ou ledit maneton (41) pénétrant dans une cavité (72) dudit pion de centrage (56) associé, un jeu radial (91) séparant au repos un maneton (41) et le pion de centrage (56) associé perpendiculairement au dit axe d'extension (AX) du maneton (41).

2. Train épicycloïdal d'engrenages selon la revendication 1, **caractérisé en ce que** ledit lien de retenue (55) comporte une plaque (59).

3. Train épicycloïdal d'engrenages selon l'une quelconque des revendications 1 à 2, **caractérisé en ce que** ledit lien de retenue (55) est de forme annulaire.

4. Train épicycloïdal d'engrenages selon l'une quelconque des revendications 1 à 3, **caractérisé en ce que** chaque pion de centrage (56) comporte une paroi de liaison (57), chaque maneton (41) comportant un fond (70), chaque paroi de liaison (57) est vissée à un fond (70) par un organe fileté (76).

5. Train épicycloïdal d'engrenages selon la revendication 4, **caractérisé en ce qu'**au repos ladite paroi de liaison (57) est en appui selon ledit axe d'extension contre ledit fond (70).

6. Train épicycloïdal d'engrenages selon l'une quelconque des revendications 4 à 6, **caractérisé en ce qu'**un premier jeu (92) sépare radialement ledit organe fileté (76) et ledit fond (70) perpendiculairement au dit axe d'extension (AX) du maneton (41), un deuxième jeu (93) séparant radialement ledit organe fileté (76) et ladite paroi de liaison (57) perpendiculairement au dit axe d'extension (AX) du maneton, au moins le premier jeu (92) ou le deuxième jeu (93) étant supérieur au jeu radial (91).

7. Train épicycloïdal d'engrenages selon la revendication 6, **caractérisé en ce qu'**au moins le premier jeu (92) ou le deuxième jeu (93) est supérieur ou égal au double du jeu radial (91).

8. Train épicycloïdal d'engrenages selon l'une quelconque des revendications 4 ou 7, **caractérisé en ce que** chaque maneton (41) présente un espace interne (80) en communication hydraulique avec un milieu extérieur (EXT), ledit maneton (41) présentant un orifice de lubrification (81) en communication fluidique avec une roue satellite (30) portée par ce maneton (41), ledit fond (70) présentant un premier canal (82) en vis-à-vis d'un deuxième canal (83) de la paroi de liaison (57), ledit deuxième canal (83) débouchant sur ledit milieu extérieur (EXT).

9. Train épicycloïdal d'engrenages selon l'une quelconque des revendications 4 ou 7, **caractérisé en ce que** ledit lien de retenue (55) comporte un système d'arrêt en rotation d'une bague interne d'un organe de roulement par maneton, ledit système d'arrêt faisant saillie dudit lien de retenue vers ladite zone pour immobiliser en rotation par rapport au maneton ladite bague interne d'un organe de roulement, ledit organe de roulement étant interposé entre un maneton et une roue satellite.

10. Train épicycloïdal d'engrenages selon l'une quelconque des revendications 1 à 9, **caractérisé en ce que** ledit lien de retenue (55) présente entre deux pions de centrage une épaisseur au moins cinq fois plus faible qu'une épaisseur dudit support.

11. Boîte de transmission de puissance (6), **caractérisée en ce que** ladite boîte de transmission de puissance (6) comporte un train épicycloïdal d'engrenages (10) selon l'une quelconque des revendications 1 à 10.

12. Aéronef (1), **caractérisé en ce que** ledit aéronef (1) comporte un train épicycloïdal d'engrenages (10) selon l'une quelconque des revendications 1 à 10.

13. Procédé pour optimiser un train épicycloïdal d'engrenages selon la revendication 1 **caractérisé en ce que** chaque extrémité distale (43) étant séparée d'une autre extrémité distale adjacente par une distance (D1), ledit procédé comporte une étape de liaison des manetons (41) avec un lien de retenue (55), chaque maneton (41) ayant un degré de liberté restreint par rapport au lien de retenue (55), le lien de retenue (55) n'exerçant aucun effort sur les manetons (41) dans des conditions normales et maintenant ladite distance dans une plage prédéfinie en présence d'une crique sur une roue satellite (30).

## Patentansprüche

1. Planetengetriebe (10) mit einem gezahnten Sonnenrad (15) und einem gezahnten Außenringrad (20), wobei das Planetengetriebe (10) mit einer Mehrzahl von gezahnten Planetenrädern (30) versehen ist, die von einem einzigen Planetenradträger (40) getragen sind, wobei der Planetenradträger (40) eine Trägereinheit (45) und eine Mehrzahl von Kurbelzapfen (41) aufweist, die von der Trägereinheit (45) getragen sind, wobei jeder Kurbelzapfen (41) einen Befestigungsabschnitt (42) aufweist, der sich von der Trägereinheit (45) weg zu einem distalen Ende (43) in einer Richtung (800) erstreckt, wobei jedes Planetenrad (30) um einen solchen Befestigungsabschnitt (42) herum angeordnet ist und einen Freiheitsgrad der Drehung um eine Erstreckungsachse (AX) des Befestigungsabschnitts (42) hat,
**dadurch gekennzeichnet, dass** das Planetengetriebe (10) ein Halteglied (55) umfasst, das von den Kurbelzapfen (41) getragen ist und die Kurbelzapfen (41) verbindet, wobei jedes Planetenrad (30) in einer Zone (95) angeordnet ist, die zwischen der Trägereinheit (45) und dem Halteglied (55) liegt, wobei jeder Kurbelzapfen (41) eine begrenzte Bewegungsfreiheit in Bezug auf das Halteglied (55) hat, wobei das Halteglied (55) zu jedem Kurbelzapfen (41) einen Zentrierstift (56) umfasst, jeder Kurbelzapfen (41) und ein zugehöriger Zentrierstift (56) entlang der Erstreckungsachse (AX) des besagten Kurbelzapfens (41) axial zumindest teilweise ineinander gesteckt sind, wobei der Zentrierstift (56) in einen Hohlraum (71) des zugehörigen Kurbelzapfens (41) eindringt oder der Kurbelzapfen (41) in einen Hohlraum (72) des zugehörigen Zentrierstiftes (56) eindringt, wobei im Ruhezustand ein radiales Spiel (91) einen Kurbelzapfen (41) und den zugehörigen Zentrierstift (56) senkrecht zu der Erstreckungsachse (AX) des Kurbelzapfens (41) trennt.

2. Planetengetriebe nach Anspruch 1,
**dadurch gekennzeichnet, dass** das Halteglied (55) eine Platte (59) umfasst.

3. Planetengetriebe nach einem der Ansprüche 1 bis 2,
**dadurch gekennzeichnet, dass** das Halteglied (55) eine ringförmige Gestalt aufweist.

4. Planetengetriebe nach einem der Ansprüche 1 bis 3,
**dadurch gekennzeichnet, dass** jeder Zentrierstift (56) eine Verbindungswand (57) hat, jeder Kurbelzapfen (41) einen Boden (70) hat, und jede Verbindungswand (57) mit einem Boden (70) durch ein Gewindeelement (76) verschraubt ist.

5. Planetengetriebe nach Anspruch 4,
**dadurch gekennzeichnet, dass** die Verbindungswand (57) im Ruhezustand entlang der Erstreckungsachse an dem Boden (70) anliegt.

6. Planetengetriebe nach einem der Ansprüche 4 bis 6,
**dadurch gekennzeichnet, dass** ein erstes Spiel (92) das Gewindeelement (76) und die Stirnwand (70) senkrecht zur Erstreckungsachse (AX) des Kurbelzapfens (41) radial trennt, dass ein zweites Spiel (93) das Gewindeelement (76) und die Verbindungswand (57) senkrecht zur Erstreckungsachse (AX) des Kurbelzapfens (41) radial trennt, und dass zumindest das erste Spiel (92) oder das zweite Spiel (93) größer als das radiale Spiel (91) ist.

7. Planetengetriebe nach Anspruch 6,
**dadurch gekennzeichnet, dass** mindestens das erste Spiel (92) oder das zweite Spiel (93) größer oder gleich dem Doppelten des radialen Spiels (91) ist.

8. Planetengetriebe nach einem der Ansprüche 4 oder 7,
Planetengetriebe nach einem der Ansprüche 4 oder 7, **dadurch gekennzeichnet, dass** jeder Kurbelzapfen (41) einen Innenraum (80) in hydraulischer Verbindung mit einem externen Medium (EXT) aufweist, dass der Kurbelzapfen (41) eine Schmieröffnung (81) in Fluidverbindung mit einem von diesem Kurbelzapfen (41) getragenen Planetenrad (30) aufweist, dass der Boden (70) einen ersten Kanal (82) aufweist, der einem zweiten Kanal (83) der Verbindungswand (57) gegenüberliegt, und dass der zweite Kanal (83) in das externe Medium (EXT) mündet.

9. Planetengetriebe nach einem der Ansprüche 4 oder 7,
**dadurch gekennzeichnet, dass** das Halteglied (55) zu jedem Kurbelzapfen ein System zum Anhalten der Drehung eines Innenrings eines Lagerelements umfasst, dass das Anhaltesystem von dem Halteglied in Richtung der Zone vorsteht, um den Innenring eines Lagerelements in der Drehung in Bezug auf den Kurbelzapfen zu immobilisieren,
und dass das Lagerelement zwischen einem Kurbelzapfen und einem Planetenrad angeordnet ist.

10. Planetengetriebe nach einem der Ansprüche 1 bis 9,
**dadurch gekennzeichnet, dass** das Halteglied (55) zwischen zwei Zentrierstiften eine Dicke aufweist, die mindestens fünfmal kleiner ist als eine Dicke der Trägereinheit.

11. Leistungsübertragungsgetriebe (6), **dadurch gekennzeichnet, dass** das Leistungsübertragungsgetriebe (6) ein Planetengetriebe (10) nach einem der Ansprüche 1 bis 10 aufweist.

12. Luftfahrzeug (1), **dadurch gekennzeichnet, dass** das Luftfahrzeug (1) ein Planetengetriebe (10) nach einem der Ansprüche 1 bis 10 aufweist.

13. Verfahren zum Optimieren eines Planetengetriebes nach Anspruch 1,
**dadurch gekennzeichnet, dass** jedes distale Ende (43) von einem anderen benachbarten distalen Ende durch einen Abstand (D1) getrennt ist, wobei das Verfahren einen Schritt des Verbindens der Kurbelzapfen (41) mit einem Halteglied (55) umfasst, wobei jeder Kurbelzapfen (41) einen eingeschränkten Freiheitsgrad in Bezug auf das Halteglied (55) hat, wobei das Halteglied (55) unter normalen Bedingungen keine Kraft auf die Kurbelzapfen (41) ausübt und den Abstand bei Vorhandensein eines Risses an einem Planetenrad (30) innerhalb eines vordefinierten Bereichs hält.

## Claims

1. Epicyclic gear train (10) comprising a toothed planet wheel (15) and an external ring gear (20), said epicyclic gear train (10) being provided with a plurality of toothed planetary gears (30) which are carried by the same planetary carrier (40), the planetary carrier (40) comprising a support (45) and a plurality of crank pins (41) carried by said support (45), each crank pin (41) comprising a fastening portion (42) which moves away from said support (45) to a distal end (43) in one direction (800), each planetary gear (30) being arranged around said fastening portion (42) and having a degree of rotational freedom about an axis of extension (AX) of said fastening portion (42),
**characterised in that** said epicyclic gear train (10) comprises a retaining link (55) which is carried by said crank pins (41) and connects the crank pins (41), each planetary gear (30) being arranged in a zone (95) between the support (45) and the retaining link (55), each crank pin (41) having a restricted freedom of movement with respect to the retaining link (55), said retaining link (55) comprising a centring pin (56) for each crank pin (41), each crank pin (41) and an associated said centring pin (56) being nested axially at least partially one within the other along the axis of extension (AX) of said crank pin (41), said centring pin (56) entering a cavity (71) in the associated crank pin (41) or said crank pin (41) entering a cavity (72) in said associated centring pin (56), a radial clearance (91) separating a crank pin (41) and the associated centring pin (56) perpendicularly to said axis of extension (AX) of the crank pin (41) when at rest.

2. Epicyclic gear train according to claim 1,
**characterised in that** said retaining link (55) comprises a plate (59).

3. Epicyclic gear train according to either claim 1 or claim 2,
**characterised in that** said retaining link (55) is annular in shape.

4. Epicyclic gear train according to any of claims 1 to 3,
**characterised in that** each centring pin (56) comprises a connecting wall (57), each crank pin (41) comprises a base (70), and each connecting wall (57) is screwed to a base (70) by a threaded element (76).

5. Epicyclic gear train according to claim 4,
**characterised in that**, when at rest, said connecting wall (57) bears against said base (70) along said axis of extension.

6. Epicyclic gear train according to any of claims 4 to 6,
**characterised in that** a first clearance (92) radially separates said threaded element (76) and said base (70) perpendicularly to said axis of extension (AX) of the crank pin (41), and a second clearance (93) radially separates said threaded element (76) and said connecting wall (57) perpendicularly to said axis of extension (AX) of the crank pin, at least the first clearance (92) or the second clearance (93) being greater than the radial clearance (91).

7. Epicyclic gear train according to claim 6,
**characterised in that** at least the first clearance (92) or the second clearance (93) is greater than or equal to twice the radial clearance (91).

8. Epicyclic gear train according to any of claims 4 to 7,
**characterised in that** each crank pin (41) has an internal space (80) in hydraulic communication with an external environment (EXT), said crank pin (41) having a lubrication port (81) in fluid communication with a planetary gear (30) carried by this crank pin (41), said base (70) having a first channel (82) facing a second channel (83) of the connecting wall (57), said second channel (83) opening onto said external environment (EXT).

9. Epicyclic gear train according to any of claims 4 to 7,
**characterised in that** said retaining link (55) comprises a system for stopping the rotation of an inner ring of a rolling element for each crank pin, said stopping system making said inner ring of a rolling element project from said retaining link towards said zone in order to immobilize the rotation relative to the crank pin, said rolling element being arranged between a crank pin and a planetary gear.

10. Epicyclic gear train according to any of claims 1 to 9,
**characterised in that** said retaining link (55) has, between two centring pins, a thickness at least five times smaller than a thickness of said support.

11. Power transmission gearbox (6),
**characterised in that** said power transmission gearbox (6) comprises an epicyclic gear train (10) according to any of claims 1 to 10.

12. Aircraft (1),
**characterised in that** said aircraft (1) comprises an epicyclic gear train (10) according to any of claims 1 to 10.

13. Method for optimizing an epicyclic gear train according to claim 1,
**characterised in that**, with each distal end (43) being separated from another adjacent distal end by a distance (D1), said method comprises a step of connecting the crank pins (41) to a retaining link (55), each crank pin (41) having a restricted degree of freedom with respect to the retaining link (55), the retaining link (55) exerting no force on the crank pins (41) under normal conditions and maintaining said distance within a predefined range when there is a crack on a planetary gear (30).
